(19) **Europäisches Patentamt European Patent Office Office européen des brevets**

(11) **EP 3 715 265 B1**

(12) **FASCICULE DE BREVET EUROPEEN**

(45) Date de publication et mention
de la délivrance du brevet:
**26.07.2023 Bulletin 2023/30**

(21) Numéro de dépôt: **20162704.9**

(22) Date de dépôt: **12.03.2020**

(51) Classification Internationale des Brevets (IPC):
*B64G 1/24* *(2006.01)*    *H04B 7/204* *(2006.01)*
*H04B 7/185* *(2006.01)*    *H01Q 3/08* *(2006.01)*
*H01Q 1/28* *(2006.01)*    *H01Q 1/12* *(2006.01)*
*G01S 19/00* *(2010.01)*    *G01S 3/14* *(2006.01)*
*B64G 1/66* *(2006.01)*

(52) Classification Coopérative des Brevets (CPC):
**B64G 1/66; H01Q 1/1257; H01Q 1/288; H01Q 3/08;**
H04B 7/18515

(54) **SYSTÈME ET PROCÉDÉ D'ESTIMATION D'UNE ERREUR DE POINTAGE D'UNE ANTENNE SATELLITE**

SYSTEM UND VERFAHREN ZUM ABSCHÄTZEN EINES AUSRICHTUNGSFEHLERS EINER SATELLITENANTENNE

SYSTEM AND METHOD FOR ESTIMATING A POINTING ERROR OF A SATELLITE ANTENNA

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.03.2019 FR 1903183**

(43) Date de publication de la demande:
**30.09.2020 Bulletin 2020/40**

(73) Titulaire: **Thales
92400 Courbevoie (FR)**

(72) Inventeur: **OSTER, Yann
31037 TOULOUSE (FR)**

(74) Mandataire: **Atout PI Laplace
Immeuble "Visium"
22, avenue Aristide Briand
94117 Arcueil Cedex (FR)**

(56) Documents cités:
**EP-A2- 0 998 063**    **US-A- 5 790 071**
**US-A1- 2014 022 120**

**Description**

L'invention concerne le domaine des systèmes de communication par satellite et plus précisément celui des antennes actives embarquées dans un satellite et fonctionnant en émission ou en réception.

L'invention porte sur un système et un procédé d'estimation d'une erreur de pointage d'une antenne de satellite.

L'invention propose une solution au problème de la détermination précise de l'erreur de pointage d'une antenne active à bord d'un satellite, en particulier, mais pas uniquement, dans le cas des antennes avec réflecteur.

L'erreur de pointage d'une antenne correspond à la différence entre la direction de visée de l'antenne qui est contrôlée mécaniquement et la direction réelle. En pratique, un écart peut exister entre la direction souhaitée et la direction réelle notamment du fait de la déformation thermo-élastique des liaisons mécaniques de l'antenne, de la déformation dynamique du satellite et de sa stabilité angulaire ou d'attitude imparfaite.

En effet, la direction de pointage de l'antenne est déterminée dans un repère lié au satellite, à partir de l'attitude du satellite. Cependant, la détermination et le maintien de l'attitude du satellite n'est possible qu'avec une marge d'erreur non nulle, typiquement de l'ordre de 0,1° sur une journée. Cette erreur se reporte sur la précision de pointage de l'antenne, ce qui impacte la direction d'arrivée des signaux reçus ou émis par l'antenne du satellite, relativement et respectivement à un repère de l'antenne ou à un repère au sol.

Cette imprécision peut être néfaste pour certaines applications. Notamment, lorsqu'on souhaite réaliser une calibration précise des différentes voies de traitement d'une charge utile, il est nécessaire de connaître avec précision la direction de pointage de l'antenne.

Par ailleurs, dans le cas d'antennes multi-faisceaux qui éclairent des spots ayant une taille réduite, il existe aussi un besoin de maîtriser finement le pointage de l'antenne afin d'assurer la stabilité de la couverture d'antenne.

Différentes solutions existent pour estimer de façon précise l'erreur de pointage d'une antenne satellite.

Une première solution consiste à équiper l'antenne d'un système dit de « RF sensing » dédié à la mesure de pointage consistant en un petit nombre de sources, voire d'une antenne spécifique, et d'un équipement électronique de traitement. Ce système doit être mécaniquement couplé à l'antenne.

Un inconvénient de cette solution est qu'elle implique une augmentation de la masse et de la consommation du satellite. Elle nécessite aussi de s'assurer que les sources supplémentaires ne perturbent pas le comportement de l'antenne. Les impacts en encombrement, masse et consommation peuvent s'avérer significatifs.

Une deuxième solution consiste à négliger les effets thermo-élastiques sur les liaisons mécaniques de l'antenne. On estime alors le pointage de l'antenne à partir de l'attitude du satellite, qui est estimée avec des capteurs optiques (du type « star tracker ») réalisant des mesures sur les étoiles. Cette solution bien qu'économique ne permet pas d'obtenir la précision attendue sur le pointage de l'antenne.

Une troisième solution, consiste, dans le cas d'une antenne en réception, à émettre plusieurs signaux depuis différentes stations sols en différentes positions géographiques, sur des fréquences connues, puis à réaliser, dans le processeur numérique de la charge utile, l'acquisition cohérente des signaux issus des différentes chaines radiofréquences en aval de l'antenne. A partir des séquences numérisées sur l'ensemble des voies, il est possible de mettre en oeuvre un algorithme de type MUSIC, basé sur une estimation de la matrice de corrélation des signaux et une décomposition en sous-espace propres bruit / signal. Ceci permet d'estimer les directions d'arrivée des signaux émis par les stations sol.

Cependant cette technique est connue pour être très sensible à un rapport signal à bruit défavorable et surtout aux imperfections en termes de retard, phase et gain des chaines radiofréquences.

D'autre part, cette méthode est difficilement applicable pour une antenne en émission, car il faut distinguer les signaux émis par les divers éléments rayonnants de l'antenne, émis simultanément, au sein du signal reçu au sol, afin de construire une matrice de corrélation. La séparation des signaux dégrade la précision des mesures dans le cas d'un grand nombre d'éléments rayonnants émettant simultanément.

On connait par ailleurs les solutions décrites dans les documents US 2014/022120 A1 EP 0998063 A2 et US 579007 A

L'invention propose une nouvelle solution au problème de l'estimation de l'erreur de pointage d'une antenne en réception ou en émission.

Elle est basée sur l'emploi d'au moins deux stations sols émettant ou recevant un signal de test selon deux directions différentes. Le signal est traité à bord ou au sol pour déterminer précisément la direction de pointage de l'antenne à partir d'un modèle du gain de l'antenne dans différentes directions.

La solution proposée permet d'améliorer la précision de l'estimation du pointage de l'antenne, sans nécessiter de moyens spécifiques à bord du satellite impactant la masse et la consommation. La précision obtenue est indépendante des dispersions entre chaines radiofréquence analogiques de la charge utile. Elle est également indépendante des variations des conditions de propagation entre les signaux émis par les différentes stations sols et des dispersions des chaines radiofréquences analogiques des stations sol. La solution est aussi sans impact sur le service rendu par le satellite. Elle permet une estimation régulière voire permanente du dépointage de l'antenne. Le niveau de précision de l'estimation peut être encore amélioré en exploitant davantage de stations sol ou différentes fréquences ou encore plusieurs voies de réception/émission à bord du satellite.

L'invention a pour objet un système d'estimation d'une erreur de pointage d'une antenne d'un satellite, le satellite comprenant une charge utile comprenant un émetteur ou un récepteur multi-voies comprenant une antenne multi-voies, une chaine de traitement analogique par voie et un ensemble de circuits intégrés numériques, le système comprenant un dispositif d'estimation d'une erreur de pointage de l'antenne implémenté à bord du satellite ou dans une station sol, le dispositif d'estimation d'une erreur de pointage étant configuré pour :

- Acquérir, pour au moins deux voies de l'émetteur ou du récepteur, au moins deux signaux de test, chaque signal de test ayant été émis ou reçu par l'antenne selon une direction différente du point de vue du satellite,
- pour au moins une paire de signaux de test acquis, déterminer, pour chaque signal de test, un gain complexe relatif entre le signal de test reçu ou émis respectivement sur deux voies distinctes,
- déterminer une mesure comparative entre les deux signaux de test parmi le ratio entre les deux gains complexes relatifs et/ou la différence entre les phases des deux gains complexes relatifs,
- déterminer une erreur de pointage de l'antenne à partir de la mesure comparative, des directions d'émission ou de réception des signaux de test et d'un modèle du gain de l'antenne pour chaque voie et dans une pluralité de directions.

Selon un aspect particulier de l'invention, chaque signal de test est composé d'au moins une raie spectrale.

Selon un aspect particulier de l'invention, le dispositif d'estimation d'une erreur de pointage est configuré pour déterminer une pluralité d'estimées d'une erreur de pointage à partir de plusieurs paires de signaux de test émis ou reçus dans des directions différentes ou plusieurs paires différentes de voies distinctes ou plusieurs fréquences de signaux de test.

Selon un aspect particulier de l'invention, le dispositif d'estimation d'une erreur de pointage est configuré pour déterminer une erreur de pointage de l'antenne en :

- déterminant, à partir du modèle du gain de l'antenne, un modèle de mesure comparative entre les deux signaux de test, dépendant d'une erreur de pointage de l'antenne, de la fréquence et des directions d'émission ou de réception des signaux de test $(\theta_A, \theta_B)$,
- recherchant la valeur de l'erreur de pointage qui permet de minimiser la différence entre la mesure comparative et le modèle de mesure comparative pris en cette valeur.

Selon un aspect particulier de l'invention, la charge utile comprend un récepteur multi-voies et le dispositif d'estimation d'une erreur de pointage est configuré pour recevoir, pour au moins deux voies de réception, une séquence temporelle numérisée d'au moins deux signaux de test, la séquence temporelle étant prélevée simultanément sur les différentes voies dans l'ensemble de circuits intégrés numériques.

Selon un aspect particulier de l'invention, le système d'estimation d'une erreur de pointage comprend en outre au moins deux stations sol de test, chaque station sol de test étant configurée pour émettre un signal de test vers le satellite.

Selon un aspect particulier de l'invention, chaque station sol de test est configurée pour émettre les signaux de test à tour de rôle sur une même fréquence ou simultanément sur des fréquences suffisamment proches pour être affectées par les mêmes erreurs.

Selon un aspect particulier de l'invention, la charge utile comprend un émetteur multi-voies, le dispositif d'estimation d'une erreur de pointage étant implémenté dans une station sol, chaque signal de test reçu par une station sol différente étant émis par l'antenne selon une direction d'émission différente du point de vue du satellite.

Selon un aspect particulier de l'invention, le système d'estimation d'une erreur de pointage comprend en outre au moins deux stations sol de test, chaque station sol de test étant configurée pour :

- Recevoir un signal de test émis par le satellite selon une direction différente du point de vue du satellite,
- Séparer le signal de test reçu au sol en plusieurs signaux correspondant aux voies d'émission du satellite,
- transmettre, au dispositif d'estimation d'une erreur de pointage, les signaux de test reçus pour au moins deux voies d'émission distinctes.

Selon un aspect particulier de l'invention, le système est configuré pour appliquer une méthode d'accès multiple aux signaux de test émis par le satellite.

L'invention a aussi pour objet un procédé d'estimation d'une erreur de pointage d'une antenne d'un satellite, le satellite comprenant une charge utile comprenant un émetteur ou un récepteur multi-voies comprenant une antenne multi-voies, une chaine de traitement analogique par voie et un ensemble de circuits intégrés numériques, le procédé comprenant les étapes de :

- Acquérir, pour au moins deux voies de l'émetteur ou du récepteur, au moins deux signaux de test, chaque signal de test ayant été émis ou reçu par l'antenne selon une direction différente,

- pour au moins une paire de signaux de test acquis, déterminer, pour chaque signal de test, un gain complexe relatif entre le signal de test reçu ou émis respectivement sur deux voies distinctes,
- déterminer une mesure comparative entre les deux signaux de test parmi le ratio entre les deux gains complexes relatifs et/ou la différence entre les phases des deux gains complexes relatifs,
- déterminer une erreur de pointage de l'antenne à partir de la mesure comparative, des directions attendues d'émission ou de réception des signaux de test et d'un modèle du gain de l'antenne pour chaque voie et dans une pluralité de directions.

Selon une variante, le procédé selon l'invention comprend en outre une étape de corriger le pointage de l'antenne à partir de l'erreur de pointage.

Les dessins annexés illustrent l'invention :

[Fig.1] représente un schéma d'un système d'estimation d'une erreur de pointage d'une antenne d'un satellite fonctionnant en réception selon un premier mode de réalisation de l'invention,

[Fig.2] représente un organigramme détaillant les étapes de réalisation d'un procédé d'estimation d'une erreur de pointage à l'aide du système de la figure 1,

[Fig.3] représente un schéma d'un système d'estimation d'une erreur de pointage d'une antenne d'un satellite fonctionnant en émission selon un second mode de réalisation de l'invention,

[Fig.4] représente un organigramme détaillant les étapes de réalisation d'un procédé d'estimation d'une erreur de pointage à l'aide du système de la figure 3.

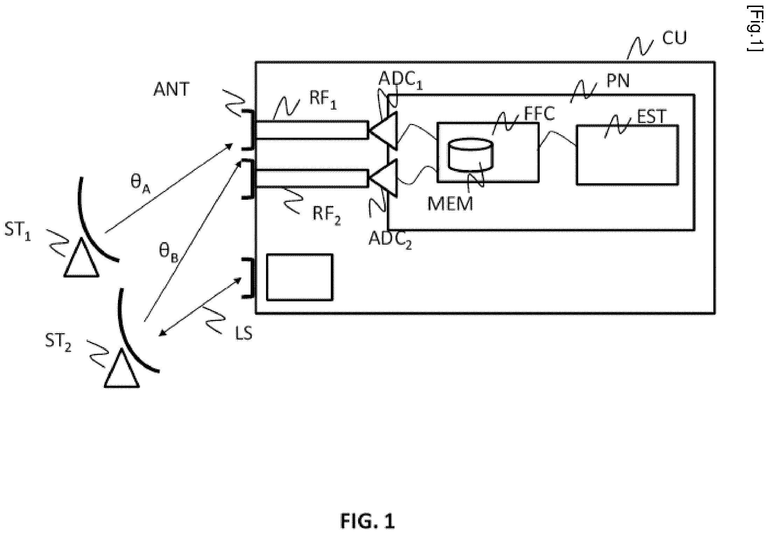

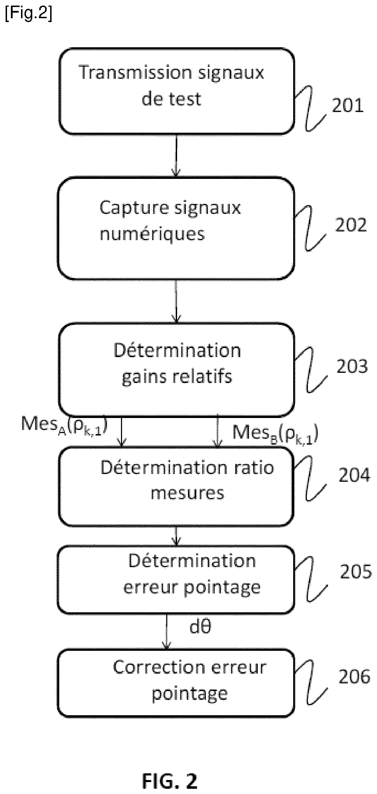

Les figures 1 et 2 illustrent la mise en oeuvre d'un système et d'un procédé d'estimation de l'erreur de pointage d'une antenne d'un satellite, en réception.

Le système décrit à la figure 1 comprend une charge utile CU d'un satellite en orbite et au moins deux stations sol $ST_1$, $ST_2$.

Chaque station sol $ST_1$, $ST_2$ comprend notamment une antenne pointée vers le satellite, une chaîne d'émission pour communiquer avec le satellite et un convertisseur numérique analogique. Dans le cas où le procédé selon l'invention est mis en oeuvre au sol, au moins une station sol $ST_2$ ou un autre équipement distant et interfacé avec la station sol $ST_2$ comprend une chaîne de réception, un convertisseur analogique numérique, un moyen de communication avec le satellite via une liaison sécurisée LS, une mémoire pour mémoriser le signal reçu numérisé et un dispositif de calcul pour traiter le signal. La liaison LS est sécurisée, par exemple par l'emploi d'un mécanisme de protection aux erreurs du type code correcteur d'erreurs.

La charge utile CU comprend une ou plusieurs antenne(s) ANT ou réseau antennaire constitué de plusieurs éléments rayonnants. Chaque élément rayonnant reçoit un signal qui est traité dans la charge utile CU par une voie de traitement. La charge utile CU présente ainsi un fonctionnement multi-voies. Une voie correspond à un élément rayonnant de l'antenne ANT. Sur la figure 1, on a représenté, par souci de simplicité, une charge utile comprenant deux voies de réception mais le nombre de voies est en général plus important.

Chaque voie de traitement comprend une chaine radiofréquence analogique $RF_1$, $RF_2$ qui est constituée d'un ou plusieurs filtre(s), d'un ou plusieurs amplificateur(s) et éventuellement d'un ou plusieurs mélangeur(s) pour réaliser une transposition en fréquence du signal reçu.

En sortie de chaque chaine radiofréquence analogique de réception, un convertisseur analogique numérique $ADC_1$, $ADC_2$ est positionné pour convertir les signaux analogiques en signaux numériques qui sont fournis à un ensemble de circuits intégrés numériques PN. Chaque circuit intégré numérique est, par exemple, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array ») ou un ensemble de portes logiques ou encore un processeur de signaux ou un processeur générique.

L'ensemble de circuits intégrés numériques PN comprend, par exemple, un filtre numérique par voie de traitement et un circuit de formation de faisceaux FFC réalisant une fonction de formation de faisceaux commune à un ensemble des voies de traitement. Le circuit de formation de faisceaux FFC a notamment pour fonction de combiner linéairement les signaux reçus avec un ensemble de gains complexes (amplitude et phase) particulier pour former un faisceau dans la direction souhaitée, relativement à un repère de l'antenne, afin de recevoir les signaux utiles. La combinaison particulière des signaux reçus avec des gains complexes constitue une loi de combinaison ou une loi de formation de faisceau.

L'exemple de la figure 1 est donné à titre purement illustratif et non limitatif. En particulier, l'ensemble de circuits intégrés numériques peut présenter une architecture modulaire différente de celle de la figure 1. Par exemple, il peut comporter plusieurs séries de circuits intégrés numériques pour chaque voie ou plusieurs circuits intégrés de formation de faisceau fonctionnant en parallèle et en cascade pour des sous-groupes de voies.

Dans tous les cas d'architecture, l'ensemble de circuits intégrés numériques comprend un moyen MEM, par exemple une mémoire, pour capturer ou enregistrer, de manière cohérente sur un même intervalle temporel, les signaux numériques d'un ensemble des voies, par exemple en sortie des convertisseurs analogique numérique $ADC_1, ADC_2$. Dans un mode de réalisation de l'invention, l'ensemble de circuits intégrés numériques PN comprend en outre un dispositif EST d'estimation de l'erreur de pointage de l'antenne ANT à partir des signaux numériques capturés par la mémoire MEM. Ce dispositif EST est réalisé, par exemple, au moyen d'un calculateur embarqué incluant des éléments logiciels et/ou matériels. Dans un autre mode de réalisation de l'invention, le dispositif EST d'estimation de l'erreur de pointage est localisé dans une station sol $ST_1, ST_2$ ou dans un autre équipement au sol.

Le procédé selon l'invention débute par la transmission 201 d'au moins deux signaux de test par au moins deux stations sol, selon deux directions d'arrivée différentes $\theta_A$, $\theta_B$. Sans sortir du cadre de l'invention, plus de deux stations sol peuvent être utilisées, chacune émettant un signal de test vers le satellite depuis une direction différente. Les directions d'arrivée doivent être différentes du point de vue du satellite. Pour satisfaire cette contrainte, les stations sol sont, par exemple, situées dans des spots différents. Un spot correspond à un faisceau de la couverture d'antenne multi-faisceaux.

Les signaux de test sont des signaux bande étroite qui sont constitués, par exemple, d'une raie spectrale à une fréquence donnée permettant de ne pas interférer avec les signaux utiles. Les signaux de test peuvent aussi être constitués de porteuses modulées par un autre signal prédéterminé. Les stations sol $ST_1, ST_2$ émettent à tour de rôle sur une même fréquence ou simultanément sur des fréquences différentes mais suffisamment proches pour être affectées de la même manière par la propagation, les chaines RF et l'antenne. Les signaux de test sont connus au préalable du satellite et des stations sol.

Les signaux reçus par le satellite sont traités à bord par les chaines radiofréquences $RF_1$, $RF_2$ de chaque voie puis sont numérisés par les convertisseurs $ADC_1, ADC_2$.

Dans une deuxième étape 202 du procédé selon l'invention, les signaux numérisés sont prélevés de manière cohérente sur un même intervalle temporel pour au moins deux voies distinctes. Par exemple, les signaux sont prélevés directement en sortie des convertisseurs analogique numérique de deux voies ou à un autre endroit dans l'ensemble de circuits intégrés numériques, la seule contrainte étant de pouvoir prélever simultanément les signaux correspondants à deux voies distinctes.

A partir des signaux numérisés simultanément sur au moins deux voies distinctes et pour au moins deux signaux de test reçus selon deux directions d'arrivée différentes, les étapes suivantes du procédé selon l'invention visent à déterminer une estimée de l'erreur de pointage de l'antenne. Ces étapes peuvent être réalisées à bord du satellite dans l'ensemble de circuits intégrés numériques PN ou par un calculateur embarqué ou au sol dans l'une des stations sol $ST_1$, $ST_2$ utilisée pour l'émission d'un signal de test ou dans un autre équipement. La figure 1 schématise le cas où le calcul de l'erreur de pointage est réalisée par un dispositif d'estimation EST qui fait partie de l'ensemble de circuits intégrés numériques PN.

Pour chacune des au moins deux voies, une étape de filtrage numérique du signal autour de la porteuse utile du signal de test permet de récupérer précisément la raie spectrale émise par les stations sol.

Ensuite, dans une étape 203, on détermine, pour chaque signal de test reçu correspondant aux émissions par les deux stations sol $ST_1$, $ST_2$, un gain complexe relatif entre deux voies de réception de la charge utile. Le gain complexe relatif est déterminé en effectuant un calcul d'intercorrélation entre le signal numérique de la première voie et le signal numérique de la seconde voie. En effet, le signal de calibration étant propagé à l'identique sur chaque voie, le résultat de l'intercorrélation des signaux permet d'obtenir un gain relatif qui contient le gain et la phase relatifs entre les deux voies de traitement. Le calcul d'intercorrélation est, par exemple, réalisé soit directement dans le domaine temporel par calcul de corrélation, soit indirectement dans le domaine fréquentiel au moyen de deux transformées de Fourier directes, d'une conjugaison complexe, d'une multiplication complexe et d'une transformée de Fourier indirecte, selon des techniques connues de l'Homme de l'art.

Soit $d\theta$ l'erreur de pointage de l'antenne ANT.

Pour la station sol $ST_1$, vue par l'antenne ANT dans la direction $\theta_A + d\theta$, on réalise ainsi une première mesure de gain complexe relatif, pour une fréquence f du signal de test:

[Math.1]

$$\mathrm{Mes}_A(\rho_{k,1}) = \rho_{k,1}\big(\mathrm{Antenne}_{f,\theta_A+d\theta}\big) * \rho_{k,1}(\mathrm{RF}_f) * \rho_{k,1}(\mathrm{DAC})$$

Pour la station sol $ST_2$, vue par l'antenne ANT dans la direction $\theta_B + d\theta$, on réalise ainsi une seconde mesure de gain complexe relatif, pour une fréquence f du signal de test :

[Math.2]

$$\mathrm{Mes}_B\big(\rho_{k,1}\big) = \rho_{k,1}\big(\mathrm{Antenne}_{f,\theta_B+d\theta}\big) * \rho_{k,1}\big(\mathrm{RF}_f\big) * \rho_{k,1}\big(\mathrm{DAC}\big)$$

Chaque mesure de gain complexe relatif correspond au produit de plusieurs termes. Les termes $\rho_{k,1}(\mathrm{Antenne}_f, \theta_A+d\theta)$ et $\rho_{k,1}(\mathrm{Antenne}_f, \theta_B+d\theta)$ correspondent au gain de l'antenne dans les directions respectives $\theta_A+d\theta$ et $\theta_B+d\theta$, pour la fréquence f.

Les termes $\rho_{k,1}(\mathrm{RF}_f)$ et $\rho_{k,1}(\mathrm{DAC})$ correspondent respectivement aux rapports de gain entre les deux voies liés aux différences de comportement des chaines radiofréquence pour la fréquence f et des convertisseurs analogique numérique de ces deux voies. Ces termes sont communs aux deux mesures.

Dans une étape suivante 204, on détermine le ratio entre les deux mesures de gain relatif déterminées à l'étape 203.

[Math. 3]

$$RMes_{B/A}, k, 1 = \frac{\rho_{k,1}\big(Antenne_{f,\theta_B+d\theta}\big)}{\rho_{k,1}\big(Antenne_{f,\theta_A+d\theta}\big)}$$

En calculant ce ratio, les termes communs aux deux mesures se compensent et on ne conserve que les contributions liées au gain de l'antenne.

Dans une autre étape 205, on compare ensuite le ratio calculé à l'étape 204 à un modèle du gain de l'antenne fonction de la direction d'arrivée du signal et de la fréquence. A partir de ce modèle, du ratio calculé à l'étape 204 et des valeurs des directions d'arrivée des signaux de test, on en déduit une estimée de l'erreur de pointage d$\theta$.

Les directions d'arrivées $\theta_A$, $\theta_B$ sont déterminées à partir des positions connues des stations sol $ST_1$, $ST_2$ et du satellite, et du repère de l'antenne du satellite.

Une méthode possible pour déterminer l'erreur de pointage d$\theta$ consiste à rechercher la valeur de d$\theta$ qui permet de minimiser l'erreur entre le ratio précité déterminé à l'étape 204 et le ratio des gains d'antennes déterminés à partir du modèle pour les directions respectives $\theta_A+d\theta$ et $\theta_B+d\theta$. Toute méthode de résolution numérique adaptée permet de déterminer une estimée de la valeur de d$\theta$.

Dans une dernière étape 206, l'erreur de pointage estimée est utilisée pour corriger le pointage de l'antenne soit mécaniquement, soit en adaptant les lois de formation des faisceaux pour intégrer le dépointage estimé d$\theta$.

Dans une variante de réalisation du procédé selon l'invention, plusieurs estimées de l'erreur de pointage d$\theta$ sont déterminées.

Par exemple, plus de deux stations sol peuvent être utilisées, dans ce cas, plusieurs ratios de gains relatifs sont calculés pour différents couples de signaux de test reçus selon des directions d'arrivée différentes.

Une autre solution consiste à exploiter plus de deux voies de réception dans la charge utile. Dans ce cas, plusieurs ratios de gains relatifs sont calculés pour différents couples de voies de réception.

Enfin, plusieurs signaux de test peuvent être émis séquentiellement sur des fréquences différentes. Dans ce cas, plusieurs ratios de gains relatifs sont calculés pour différentes fréquences.

Les trois variantes décrites ci-dessus peuvent être combinées entre elles (plusieurs stations sol, plusieurs voies de réception et plusieurs fréquences).

Un avantage à l'utilisation de plusieurs estimées de l'erreur de pointage est que cela permet de lever certaines ambiguïtés résiduelles, par exemple si plusieurs valeurs de l'erreur d$\theta$ satisfont l'égalité entre le ratio de mesures de gains et le ratio des valeurs de gains déterminées à partir du modèle de gain de l'antenne.

Dans une autre variante de réalisation du procédé selon l'invention, seule la phase ou seule l'amplitude des gains complexes relatifs sont exploités. Dans ce cas, le ratio de gains complexes calculé à l'étape 204 est remplacé par un ratio d'amplitudes ou par une différence de phases.

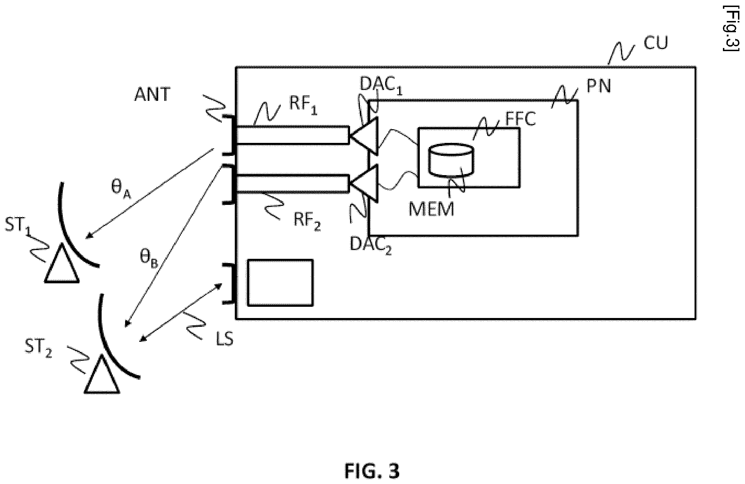

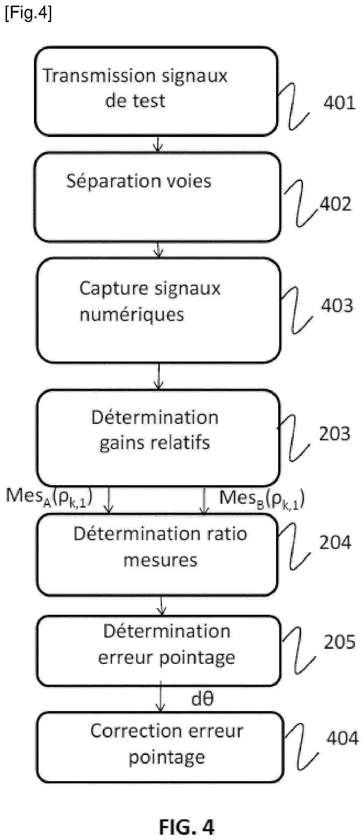

Les figures 3 et 4 décrivent une autre variante de réalisation de l'invention appliquée à une antenne en émission.

La figure 3 représente une charge utile CU d'un satellite en orbite comprenant une antenne ANT fonctionnant en émission. La charge utile CU comprend un ensemble de circuits intégrés numériques PN réalisant une fonction de formation de faisceau en émission sur N voies, des convertisseurs numérique analogique en sortie de chaque voie, des chaines RF d'émission connectées entre les sorties des convertisseurs numérique analogique et une ou plusieurs antenne(s) ANT ou réseau antennaire constitué de plusieurs éléments rayonnants. Chaque voie de traitement en émission comprend une chaine radiofréquence analogique $RF_1$, $RF_2$ qui est constituée d'un ou plusieurs filtre(s), d'un ou plusieurs amplificateur(s) et éventuellement d'un ou plusieurs mélangeur(s) pour réaliser une transposition en fréquence du signal reçu. Chaque élément rayonnant est associé à une voie d'émission. La charge utile CU présente ainsi un fonctionnement multi-voies. Sur la figure 3, on a représenté une charge utile comprenant deux voies d'émission mais le nombre de voies est en général plus important.

La figure 4 détaille, sur un organigramme, les étapes de réalisation d'un procédé d'estimation et correction de l'erreur de pointage de l'antenne ANT.

Dans une première étape 401, un signal de test, similaire à celui décrit précédemment, est généré dans l'ensemble de circuits intégrés numériques PN. Par exemple, il peut être stocké numériquement dans une mémoire MEM puis transmis aux convertisseurs numérique-analogique $DAC_1, DAC_2$ de chaque voie de traitement.

Pour pouvoir séparer les voies d'émission lorsque le signal de test est reçu au sol, on utilise une technique d'accès multiple pour émettre le signal de test sur les différentes voies d'émission. La technique d'accès est, par exemple, une technique d'accès par code d'étalement (de type CDMA), dans ce cas le signal de test numérique généré est étalé avec un code d'étalement différent pour chaque voie d'émission. Une autre technique d'accès possible est une technique par accès en fréquence (de type FDMA) qui consiste à moduler le signal de test sur une fréquence différente pour chaque voie d'émission. Les signaux numériques peuvent être pré-calculés et stockés dans une mémoire ou un registre MEM.

Le signal de test est transmis ainsi sur un ensemble des voies d'émission de l'antenne ANT vers au moins deux stations sol $ST_1, ST_2$ selon deux directions $\theta_A$, $\theta_B$ différentes.

Dans chacune des stations sol $ST_1, ST_2$, les signaux sont séparés 402 par voies d'émission en fonction de la technique d'accès (par exemple de type CDMA, FDMA ou autre) utilisée puis sont numérisés 403.

Ensuite, les étapes 203,204,205 décrites à la figure 2 sont appliquées à l'identique pour déterminer une estimée de l'erreur de pointage de l'antenne ANT.

Le calcul de l'estimée de l'erreur de pointage est réalisé soit dans l'une des stations sol $ST_1, ST_2$, soit dans un équipement sol connecté ou non aux stations sol $ST_1, ST_2$,

L'erreur de pointage est ensuite transmise 404 au satellite via une liaison sécurisée LS pour correction du pointage de l'antenne.

**Revendications**

1. Système d'estimation d'une erreur de pointage d'une antenne (ANT) d'un satellite, le satellite comprenant une charge utile (CU) comprenant un émetteur ou un récepteur multi-voies comprenant une antenne multi-voies (ANT), une chaine de traitement analogique par voie et un ensemble de circuits intégrés numériques (PN), le système comprenant un dispositif d'estimation (EST) d'une erreur de pointage de l'antenne implémenté à bord du satellite ou dans une station sol, le système étant **caractérisé en ce que** le dispositif d'estimation d'une erreur de pointage est configuré pour :

   - Acquérir (202,403), pour au moins deux voies de l'émetteur ou du récepteur, au moins deux signaux de test, chaque signal de test ayant été émis ou reçu par l'antenne selon une direction différente ($\theta_A$, $\theta_B$) du point de vue du satellite,
   - pour au moins une paire de signaux de test acquis, déterminer (203), pour chaque signal de test, un gain complexe relatif entre le signal de test reçu ou émis respectivement sur deux voies distinctes,
   - déterminer une mesure comparative (204) entre les deux signaux de test parmi le ratio entre les deux gains complexes relatifs et/ou la différence entre les phases des deux gains complexes relatifs,
   - déterminer (205) une erreur de pointage ($d\theta$) de l'antenne à partir de la mesure comparative, des directions d'émission ou de réception des signaux de test ($\theta_A$, $\theta_B$) et d'un modèle du gain de l'antenne pour chaque voie et dans une pluralité de directions.

2. Système d'estimation d'une erreur de pointage d'une antenne selon l'une des revendications précédentes dans lequel chaque signal de test est composé d'au moins une raie spectrale.

3. Système d'estimation d'une erreur de pointage d'une antenne selon l'une des revendications précédentes dans lequel le dispositif d'estimation (EST) d'une erreur de pointage est configuré pour déterminer une pluralité d'estimées d'une erreur de pointage à partir de plusieurs paires de signaux de test émis ou reçus dans des directions différentes ou plusieurs paires différentes de voies distinctes ou plusieurs fréquences de signaux de test.

4. Système d'estimation d'une erreur de pointage d'une antenne selon l'une des revendications précédentes dans lequel le dispositif d'estimation (EST) d'une erreur de pointage est configuré pour déterminer une erreur de pointage de l'antenne en :

   - déterminant, à partir du modèle du gain de l'antenne, un modèle de mesure comparative entre les deux signaux de test, dépendant d'une erreur de pointage de l'antenne, de la fréquence et des directions d'émission ou de réception des signaux de test ($\theta_A$, $\theta_B$),

- recherchant la valeur de l'erreur de pointage qui permet de minimiser la différence entre la mesure comparative et le modèle de mesure comparative pris en cette valeur.

5. Système d'estimation d'une erreur de pointage d'une antenne d'un satellite selon l'une des revendications 1 à 4 dans lequel la charge utile (CU) comprend un récepteur multi-voies et le dispositif d'estimation (EST) d'une erreur de pointage est configuré pour recevoir, pour au moins deux voies de réception, une séquence temporelle numérisée d'au moins deux signaux de test, la séquence temporelle étant prélevée simultanément sur les différentes voies dans l'ensemble de circuits intégrés numériques (PN).

6. Système d'estimation d'une erreur de pointage d'une antenne d'un satellite selon la revendication 5 comprenant en outre au moins deux stations sol de test ($ST_1$,$ST_2$), chaque station sol de test étant configurée pour émettre (201) un signal de test vers le satellite.

7. Système d'estimation d'une erreur de pointage d'une antenne d'un satellite selon l'une quelconque des revendications 5 ou 6 dans lequel chaque station sol de test est configurée pour émettre les signaux de test à tour de rôle sur une même fréquence ou simultanément sur des fréquences suffisamment proches pour être affectées par les mêmes erreurs.

8. Système d'estimation d'une erreur de pointage d'une antenne d'un satellite selon l'une des revendications 1 à 4 dans lequel la charge utile comprend un émetteur multi-voies, le dispositif d'estimation (EST) d'une erreur de pointage étant implémenté dans une station sol, chaque signal de test reçu par une station sol différente étant émis par l'antenne selon une direction d'émission différente ($\theta_A$, $\theta_B$) du point de vue du satellite.

9. Système d'estimation d'une erreur de pointage d'une antenne d'un satellite selon la revendication 8 comprenant en outre au moins deux stations sol de test ($ST_1$,$ST_2$), chaque station sol de test étant configurée pour :

   - Recevoir (401) un signal de test émis par le satellite selon une direction différente du point de vue du satellite,
   - Séparer (402) le signal de test reçu au sol en plusieurs signaux correspondant aux voies d'émission du satellite,
   - transmettre, au dispositif d'estimation d'une erreur de pointage, les signaux de test reçus pour au moins deux voies d'émission distinctes.

10. Système d'estimation d'une erreur de pointage d'une antenne d'un satellite selon l'une quelconque des revendications 8 ou 9 dans lequel le système est configuré pour appliquer une méthode d'accès multiple aux signaux de test émis par le satellite.

11. Procédé d'estimation d'une erreur de pointage d'une antenne d'un satellite, le satellite comprenant une charge utile comprenant un émetteur ou un récepteur multi-voies comprenant une antenne multi-voies, une chaine de traitement analogique par voie et un ensemble de circuits intégrés numériques, le procédé étant **caractérisé en ce qu'**il comprend les étapes de :

   - Acquérir (202,403), pour au moins deux voies de l'émetteur ou du récepteur, au moins deux signaux de test, chaque signal de test ayant été émis ou reçu par l'antenne selon une direction différente ($\theta_A$, $\theta_B$) du point de vue du satellite,
   - pour au moins une paire de signaux de test acquis, déterminer (203), pour chaque signal de test, un gain complexe relatif entre le signal de test reçu ou émis respectivement sur deux voies distinctes,
   - déterminer (204) une mesure comparative entre les deux signaux de test parmi le ratio entre les deux gains complexes relatifs et/ou la différence entre les phases des deux gains complexes relatifs,
   - déterminer (205) une erreur de pointage (d$\theta$) de l'antenne à partir de la mesure comparative, des directions attendues d'émission ou de réception des signaux de test et d'un modèle du gain de l'antenne pour chaque voie et dans une pluralité de directions.

12. Procédé d'estimation d'une erreur de pointage d'une antenne d'un satellite selon la revendication 11 comprenant en outre une étape de corriger (206,404) le pointage de l'antenne (ANT) à partir de l'erreur de pointage (d$\theta$).

**Patentansprüche**

1. System zum Schätzen eines Ausrichtungsfehlers einer Satellitenantenne (ANT), wobei der Satellit eine Nutzlast (CU) umfasst, die einen Mehrkanalsender oder -empfänger umfasst, der eine Mehrkanalantenne (ANT), eine analoge Verarbeitungskette pro Kanal und eine Reihe von digitalen integrierten Schaltungen (PN) umfasst, wobei das System eine an Bord des Satelliten oder in einer Bodenstation implementierte Schätzungsvorrichtung (EST) zum Schätzen eines Ausrichtungsfehlers der Antenne umfasst, wobei das System **dadurch gekennzeichnet ist, dass** die Vorrichtung zum Schätzen eines Ausrichtungsfehlers konfiguriert ist zum:

    - Erfassen (202, 403), für mindestens zwei Kanäle des Senders oder des Empfängers, von mindestens zwei Testsignalen, wobei jedes Testsignal von der Antenne in einer verschiedenen Richtung ($\theta_A$, $\theta_B$) aus der Sicht des Satelliten gesendet oder empfangen wurde,
    - Bestimmen (203), für mindestens ein Paar von erfassten Testsignalen, für jedes Testsignal, einer relativen komplexen Verstärkung zwischen dem empfangenen bzw. gesendeten Testsignal auf zwei unterschiedlichen Kanälen,
    - Bestimmen (204) eines Vergleichsmaßes zwischen den beiden Testsignalen aus dem Verhältnis zwischen den beiden relativen komplexen Verstärkungen und/oder der Differenz zwischen den Phasen der beiden relativen komplexen Verstärkungen,
    - Bestimmen (205) eines Ausrichtungsfehlers ($d\theta$) der Antenne auf der Basis des Vergleichsmaßes, der Sende- oder Empfangsrichtungen der Testsignale ($\theta_A$, $\theta_B$) und eines Antennengewinnmodells für jeden Kanal und in einer Vielzahl von Richtungen.

2. System zum Schätzen eines Ausrichtungsfehlers einer Antenne nach einem der vorhergehenden Ansprüche, wobei jedes Testsignal aus mindestens einer Spektrallinie zusammengesetzt ist.

3. System zum Schätzen eines Ausrichtungsfehlers einer Antenne nach einem der vorhergehenden Ansprüche, wobei die Schätzungsvorrichtung (EST) zum Schätzen eines Ausrichtungsfehlers zum Bestimmen einer Vielzahl von Ausrichtungsfehlerschätzungen auf der Basis von mehreren Paaren von in verschiedenen Richtungen gesendeten oder empfangenen Testsignalen oder mehreren verschiedenen Paaren von unterschiedlichen Kanälen oder mehreren Testsignalfrequenzen konfiguriert ist.

4. System zum Schätzen eines Ausrichtungsfehlers einer Antenne nach einem der vorhergehenden Ansprüche, wobei die Schätzungsvorrichtung (EST) zum Schätzen eines Ausrichtungsfehlers zum Bestimmen eines Ausrichtungsfehlers der Antenne konfiguriert ist durch:

    - Bestimmen, auf der Basis des Antennengewinnmodells, eines Vergleichsmaßmodells zwischen den beiden Testsignalen, das von einem Ausrichtungsfehler der Antenne, der Frequenz und den Sende- oder Empfangsrichtungen der Testsignale ($\theta_A$, $\theta_B$) abhängt,
    - Suchen des Wertes des Ausrichtungsfehlers, der es zulässt, die Differenz zwischen dem Vergleichsmaß und dem in diesem Wert angenommenen Vergleichsmaßmodell zu minimieren.

5. System zur Schätzung eines Ausrichtungsfehlers einer Satellitenantenne nach einem der Ansprüche 1 bis 4, wobei die Nutzlast (CU) einen Mehrkanalempfänger umfasst und die Schätzungsvorrichtung (EST) zum Schätzen eines Ausrichtungsfehlers zum Empfangen, für mindestens zwei Empfangskanäle, einer nummerierten zeitlichen Sequenz von mindestens zwei Testsignalen konfiguriert ist, wobei die zeitliche Sequenz gleichzeitig auf den verschiedenen Kanälen in dem Satz von digitalen integrierten Schaltungen (PN) abgegriffen wird.

6. System zur Schätzen eines Ausrichtungsfehlers einer Satellitenantenne nach Anspruch 5, das ferner mindestens zwei Testbodenstationen ($ST_1$, $ST_2$) umfasst, wobei jede Testbodenstation zum Senden (201) eines Testsignals zum Satelliten konfiguriert ist.

7. System zur Schätzung eines Ausrichtungsfehlers einer Satellitenantenne nach einem der Ansprüche 5 oder 6, wobei jede Testbodenstation zum abwechselnden Senden der Testsignale auf derselben Frequenz oder gleichzeitig auf unterschiedlichen Frequenzen konfiguriert ist, die ausreichend nahe beieinander liegen, um von denselben Fehlern beeinflusst zu werden.

8. System zur Schätzung eines Ausrichtungsfehlers einer Satellitenantenne nach einem der Ansprüche 1 bis 4, wobei die Nutzlast einen Mehrkanalsender umfasst, die Schätzungsvorrichtung (EST) zur Schätzung eines Ausrichtungsfehlers in einer Bodenstation implementiert ist, jedes von einer verschiedenen Bodenstation empfangene Testsignal von der Antenne in einer verschiedenen Senderichtung ($\theta_A$, $\theta_B$) aus Sicht des Satelliten gesendet wird.

9.  System zur Schätzung des Ausrichtungsfehlers einer Satellitenantenne nach Anspruch 8, das ferner mindestens zwei Testbodenstationen ($ST_1$, $ST_2$) umfasst, wobei jede Testbodenstation konfiguriert ist zum:

    - Empfangen (401) eines Testsignals, das von dem Satelliten in einer verschiedenen Richtung aus der Sicht des Satelliten ausgesendet wird,
    - Trennen (402) des am Boden empfangenen Testsignals in mehrere Signale entsprechend den Sendekanälen des Satelliten,
    - Übertragen der für mindestens zwei unterschiedliche Sendekanäle empfangenen Testsignale zu der Vorrichtung zur Schätzung eines Ausrichtungsfehlers.

10. System zur Schätzung eines Ausrichtungsfehlers einer Satellitenantenne nach einem der Ansprüche 8 oder 9, wobei das System zum Anwenden eines Mehrfachzugriffsverfahrens auf die vom Satelliten gesendeten Testsignale konfiguriert ist.

11. Verfahren zum Schätzen eines Ausrichtungsfehlers einer Satellitenantenne, wobei der Satellit eine Nutzlast umfasst, die einen Mehrkanalsender oder -empfänger umfasst, der eine Mehrkanalantenne, eine analoge Kanalverarbeitungskette und einen Satz digitaler integrierter Schaltungen umfasst, wobei das Verfahren **dadurch gekennzeichnet ist, dass** es die folgenden Schritte umfasst:

    - Erfassen (202, 403), für mindestens zwei Kanäle des Senders oder des Empfängers, von mindestens zwei Testsignalen, wobei jedes Testsignal von der Antenne in einer verschiedenen Richtung ($\theta_A$, $\theta_B$) aus der Sicht des Satelliten gesendet oder empfangen wurde,
    - Bestimmen (203), für mindestens ein Paar von erfassten Testsignalen, für jedes Testsignal, einer relativen komplexen Verstärkung zwischen dem empfangenen bzw. gesendeten Testsignal auf zwei unterschiedlichen Kanälen,
    - Bestimmen (204) eines Vergleichsmaßes zwischen den beiden Testsignalen aus dem Verhältnis zwischen den beiden relativen komplexen Verstärkungen und/oder der Differenz zwischen den Phasen der beiden relativen komplexen Verstärkungen,
    - Bestimmen (205) eines Ausrichtungsfehlers ($d\theta$) der Antenne auf der Basis des Vergleichsmaßes, der erwarteten Sende- oder Empfangsrichtungen der Testsignale und eines Antennengewinnmodells für jeden Kanal und in einer Vielzahl von Richtungen.

12. Verfahren zum Schätzen eines Ausrichtungsfehlers einer Satellitenantenne nach Anspruch 11, das ferner einen Schritt des Korrigierens (206, 404) der Ausrichtung der Antenne (ANT) auf der Basis des Ausrichtungsfehlers ($d\theta$) umfasst.

**Claims**

1.  A system for estimating a pointing error of an antenna (ANT) of a satellite, the satellite comprising a payload (CU) comprising a multichannel transmitter or receiver comprising a multichannel antenna (ANT), one analogue processing chain per channel and a set of digital integrated circuits (PN), the system comprising an estimation device (EST), implemented aboard the satellite or in a ground station, for estimating a pointing error of the antenna, the system being **characterised in that** the device for estimating a pointing error is configured to:

    - acquire (202, 403), for at least two channels of the transmitter or of the receiver, at least two test signals, each test signal having been transmitted or received by the antenna along a different direction ($\theta_A$, $\theta_B$) from the viewpoint of the satellite,
    - for at least one pair of acquired test signals, determine (203), for each test signal, a relative complex gain between the test signal received or transmitted respectively on two distinct channels,
    - determine a comparative measurement (204) between the two test signals from either the ratio between the two relative complex gains and/or the difference between the phases of the two relative complex gains,
    - determine (205) a pointing error ($d\theta$) of the antenna on the basis of the comparative measurement, of the expected directions of transmission or of reception of the test signals ($\theta_A$, $\theta_B$) and of a model of the gain of the antenna for each channel and in a plurality of directions.

**2.** The system for estimating a pointing error of an antenna according to one of the preceding claims, wherein each test signal is composed of at least one spectral line.

**3.** The system for estimating a pointing error of an antenna according to one of the preceding claims, wherein the estimation device (EST) for estimating a pointing error is configured to determine a plurality of estimates of a pointing error on the basis of several pairs of test signals transmitted or received in different directions or several different pairs of distinct channels or several frequencies of test signals.

**4.** The system for estimating a pointing error of an antenna according to one of the preceding claims, wherein the estimation device (EST) for estimating a pointing error is configured to determine a pointing error of the antenna by:

- determining, on the basis of the model of the gain of the antenna, a model of comparative measurement between the two test signals, dependent on a pointing error of the antenna, on the frequency and on the directions of transmission or of reception of the test signals ($\theta_A$, $\theta_B$),
- searching for the value of the pointing error which makes it possible to minimise the difference between the comparative measurement and the comparative measurement model taken at this value.

**5.** The system for estimating a pointing error of an antenna of a satellite according to one of claims 1 to 4, wherein the payload (CU) comprises a multichannel receiver and the estimation device (EST) for estimating a pointing error is configured to receive, for at least two reception channels, a digitised temporal sequence of at least two test signals, the temporal sequence being sampled simultaneously on the various channels in the set of digital integrated circuits (PN).

**6.** The system for estimating a pointing error of an antenna of a satellite according to claim 5, further comprising at least two test ground stations ($ST_1$, $ST_2$), each test ground station being configured to transmit (201) a test signal towards the satellite.

**7.** The system for estimating a pointing error of an antenna of a satellite according to any one of claims 5 or 6, wherein each test ground station is configured to transmit the test signals in turn on one and the same frequency or simultaneously on distinct frequencies which are sufficiently close to be affected by the same errors.

**8.** The system for estimating a pointing error of an antenna of a satellite according to one of claims 1 to 4, wherein the payload comprises a multichannel transmitter, the estimation device (EST) for estimating a pointing error being implemented in a ground station, each test signal received by a different ground station being transmitted by the antenna along a different direction of transmission ($\theta_A$, $\theta_B$) from the viewpoint of the satellite.

**9.** The system for estimating a pointing error of an antenna of a satellite according to claim 8, further comprising at least two test ground stations ($ST_1$, $ST_2$), each test ground station being configured to:

- receive (401) a test signal transmitted by the satellite along a different direction from the viewpoint of the satellite,
- separate (402) the test signal received on the ground into several signals corresponding to the respective transmission channels of the satellite,
- dispatch, to the device for estimating a pointing error, the test signals received for at least two distinct transmission channels.

**10.** The system for estimating a pointing error of an antenna of a satellite according to any one of claim 8 or 9, wherein the system is configured to apply a procedure for multiple access to the test signals transmitted by the satellite.

**11.** A method for estimating a pointing error of an antenna of a satellite, the satellite comprising a payload comprising a multichannel transmitter or receiver comprising a multichannel antenna, one analogue processing chain per channel and a set of digital integrated circuits, the method being **characterised in that** it comprises the steps of:

- acquiring (202, 403), for at least two channels of the transmitter or of the receiver, at least two test signals, each test signal having been transmitted or received by the antenna along a different direction ($\theta_A$, $\theta_B$) from the viewpoint of the satellite,
- for at least one pair of acquired test signals, determining (203), for each test signal, a relative complex gain between the test signal received or transmitted respectively on two distinct channels,
- determining (204) a comparative measurement between the two test signals from the ratio between the two relative complex gains and/or the difference between the phases of the two relative complex gains,

- determining (205) a pointing error (dθ) of the antenna on the basis of the comparative measurement, of the expected directions of transmission or of reception of the test signals and of a model of the gain of the antenna for each channel and in a plurality of directions.

12. The method for estimating a pointing error of an antenna of a satellite according to claim 11, further comprising a step of correcting (206, 404) the pointing of the antenna (ANT) on the basis of the pointing error (dθ).

[Fig.1]

FIG. 1

[Fig.2]

Transmission signaux de test — 201

Capture signaux numériques — 202

Détermination gains relatifs — 203

$Mes_A(\rho_{k,1})$ $Mes_B(\rho_{k,1})$

Détermination ratio mesures — 204

Détermination erreur pointage — 205

$d\theta$

Correction erreur pointage — 206

**FIG. 2**

[Fig.3]

FIG. 3

[Fig.4]

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014022120 A1
- EP 0998063 A2
- US 579007 A